# EUROPEAN PATENT APPLICATION

(11) **EP 1 468 765 A1**
(43) Date of publication of application: **20.10.2004**
(21) Application number: 03076130.8
(22) Date of filing: 16.04.2003
(51) Int. Cl.: B22F 7/00, B32B 15/01

(54) **Preform for foamed sheet product and foamed product manufactured therefrom**

(71) Applicant: Corus Technology BV, 1970 CA IJmuiden (NL)
(72) Inventor: Wittebrood, Adrianus Jacobus, 1991 HB Velserbroek (NL); Schram, Hendrik Leendert, 1566 LJ Assendelft (NL)
(74) Representative: Kruit, J., Ir.

(57) **Abstract**

The present invention relates to a novel approach that allows the powder-free production of pre-foamed sheet material, also referred to as preform. The preform of a foamable laminate comprising of a core of a foaming agent between two metal layers or metal skin plates, and wherein the foaming agent is applied on at least one side of at least one aluminium-silicon alloy sheet interposed between the two metal layers.

## Description

In the present application a novel approach is presented that allows the powder-free production of pre-foamed sheet material, also referred to as preform.

The most common approach to date to produce foamable sheet, aluminium-silicon alloy powder are mixed with titanium hydride. This mixture is then compacted between two metal skin sheets. This sandwich gets is cellular structure by heating the sandwich to the melting point of the aluminium-silicon alloy powder mixture, the titaniumhydride will decompose and will generate hydrogen gas. This hydrogen will lead to the formation of bubbles in the molten aluminium-silicon alloy mixture. By cooling the foamed structure at the appropriated time a very open structure can be realised between two metal sheets.

Major drawbacks of the above-described method are:
1. Titaniumhydride is only added to the mixture up to 4 wt.%. Mixing a small volume of powder homogenously in a large volume is difficult to do.
2. Aluminium powders are very hazardous and can give rise to, when not handle with extreme caution, dust explosions.
3. Powders are difficult to contain in an area. Rolling or compacting powders will need special adjustments of the mill or sample.
4. The smaller the powder becomes the larger the contribution of the always-present oxide becomes. These oxides act as barriers and will inhibit fusion of the powder particles when they are molten, leading to in homogenously melting behaviour.

To overcome one or more of these problems or drawbacks a new way to produce pre-foamed metal sheets or performs, such as aluminium or steel sheets, is proposed.

Important in the production of aluminium foam is the even distribution of the foaming agent. As previously mentioned, distributing two very different amounts and different types of powders homogenously is difficult and gives rise to several drawbacks.

However, according to this invention it is recognised that in order to distributed a small amount of powder over a large surface area is something not that difficult to do. To make use of this insight the following approach was proposed and successfully reduced to practice.

Use instead of an aluminium-silicon alloy powder an aluminium-silicon alloy sheet and coat this alloy sheet with the required amount of foaming agent, i.e. titanium hydride. Suitable aluminium-silicon sheet are selected from the Aluminum Association ("AA") 4xxx-series aluminium alloys. AA4xxx-series alloy sheet is commercially available in a wide thickness range, of about 0.05 to 4 mm.
In an embodiment the foaming agent is in the form titaniumhydride (TiH₂) powder in a quantity of from 0.02 to 8 wt.% of the aluminium-silicon alloy sheet, and preferably in a quantity of 0.05 to 2.5%.
In an embodiment to ensure that an even distribution of titaniumhydride, or any other foaming agent, and aluminium-silicon alloy is obtained in the resultant product, the use of multiple layers of the aluminium-silicon alloy coated sheet is proposed.
Other suitable foaming agents comprise a hydrogenatable metal powder selected from Ti, Fe, Co, Al, Cu, Mg, W, Mn, Cr, Be and an alloy thereof.

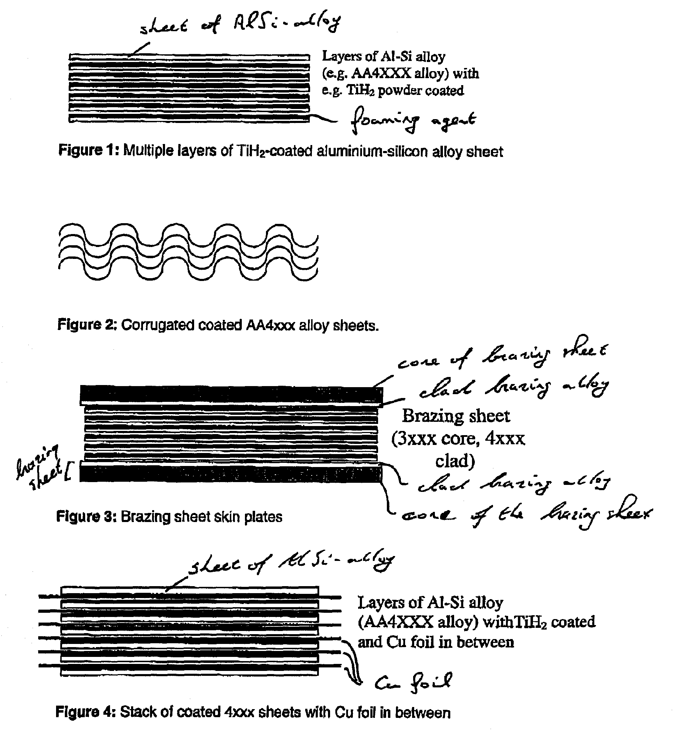

Figure 1 gives a schematic representation of an embodiment of the concept of the current invention.

In an embodiment and to assure good adhesion, the AA4xxx alloy sheet can be made corrugated. This corrugation will allow linking between the two sheets during a hot rolling operation, thereby giving a better and uniform distribution of the foaming agent. Figure 2 shows schematically an example of a corrugated pattern.

The stack of layers can be put between two skin plates of different alloy types, steel sheet or aluminium sheet, e.g. aluminium alloy selected from the group comprising AA1xxx, AA2xxx, AA3xxx, AA5xxx, AA6xxx and AA7xxx-series alloys.

However, to assure good adhesion of the skin plate during the foaming operation a preferred option would be to use aluminium brazing sheet as skin plate. Aluminium brazing sheet comprises typically of an AA3xxx-series core alloy with on one or both sides a layer of a brazeable aluminium alloy bonded to it. Also, core alloys selected from the AA5xxx, AA6xxx, AA2xxx-series can be selected. Typical brazeable aluminium alloys useful as such a clad layer are the Aluminum Association ("AA") 4xxx-series-alloys, typically having Si in the range of 4 to 14%, such as for example AA4343 and AA4045. The brazeable aluminium alloys may be coupled to the core alloy in various ways known in the art, for example by means of roll bonding, cladding, semi-continuous or continuous casting processes, or thermal spaying.

Figure 3 shows an embodiment of a combination of foaming agent-coated AA4xxx-aloy sheets with brazing sheet as skin plate.

Such a stack of sheets can be heated up to an appropriate hot rolling temperature. This temperature prior to and during hot rolling should not exceed 400°C to avoid any decomposition of the foaming agent, and the hot rolling being carried out at a temperature of the strips and the foaming agent in the range of 220 to 400°C, preferably in the range of 300 to 380°C. Normal hot rolling practice can be applied in order to obtain adherence between the different layers in the stack. Rolling reduction of 25 % or higher depending on the number of sheets and thickness of the sheets will lead to an even adhesion between the different layers. However, it will be understood by the skilled person that a cold rolling operation might also result in an improved adhesion between the various sheets. Furthermore, the rolling will cause even spreading of the foaming agent between the layers, allowing a homogenous foaming operation thereafter.
A good adherence of the various layers can be achieved also by dedicated rolling practices without any high deformation or rolling reduction, for example as described in WO-03/018223, WO-03/018221 and WO-03/022469, incorporated herein by reference. Although the methods disclosed in these prior art documents are for processing monolithic slabs or plates, the disclosed principle can be applied also for manufacturing performs of foamable laminates in accordance with the invention.

It is considered to be an advantage of the present invention that following the rolling operation used, or any other load applying method, the preform can be provided in the form of a coil.

An alternative of the process would be to hot roll the sandwich between two steel skin plates, e.g. low carbon steel or stainless steel. Preferably this combination needs a small hot roll pass to assure good adhesion between the aluminium/silicon and the steel skin plates. However, it is envisaged that also titanium sheet can be used. Also different metal sheet can be used, e.g. one aluminium sheet in combination with a carbon steel sheet.

The aluminium-silicon alloys used can have silicon contents between 4 and 14 wt.% in combination with alloying elements like zinc, copper, magnesium and others. These elements may lower the melting temperature of the Al-Si alloy or improve wetting behaviour or change the foam structure or combinations. The wetting behaviour can typically be favourably influenced by the addition of small amounts, e.g. up to 1 wt.%, of a wetting agent, such as lead, bismuth, tin, antimony, lithium, and mixtures thereof.

With the use of standard AA4xxx alloys the choice of skin plate is limited due to the melting point of the AA4xxx alloy. This melting point typically for an AA4xxx -alloy falls in a range of about 570°C and 600°C, depending on the amount of silicon used.

The used skin plates should have a melting point above this range, this limits the choice of alloys since most aluminium alloys, in particular the higher alloyed ones have melting points below 570°C for some relevant phases. To expand the range of usable aluminium skin alloys, one should preferably lower the melting point of the used AA4xxx sheet alloy. An advantageous way of doing this is presented schematically in Figure 4. Between the coated AA4xxx layers a thin foil of Cu or Cu-alloy is placed. The thickness should be chosen such that the Cu foil and AA4xxx sheet have a combined chemistry having a melting point of in a range of 550 to 500°C, and typically around 530°C.

Another improvement in the foaming behaviour can be obtained by using modified silicon alloys. In this context modified means that the sizes of the primairy silicon particles in the AA4xxx alloy have been decreased. Decreasing the primary silicon particles results in more silicon particles. Melting of an AA4xxx alloy starts at the surface of a silicon particle, more silicon particles would result in a more even melting behaviour. Adding small quantities (up to 0.07 wt.%) of alloying elements like sodium, strontium modifies the size of the silicon particles in the AA4xxx alloy.

The foaming agent can be applied by different means. Standard application techniques are roll-coating, dipping, spraying, electrostatic spraying, etc.
Application techniques might require some modification of the vehicle that is being used to bring the TiH₂ particles, or any other foaming agent, to the surface of the AA4xxx alloy sheet. Preferably contact with water should be avoided at any time.
To assure proper adhesion to the AA4xxx-series alloy surface a binder can be used. Preferably, the binder should be decomposing during heat-up before any hot rolling operation, preferably in such a way that the remaining residue does not interfere with the hot rolling process or in any subsequent foaming action.

The preform in accordance with the invention can be used to manufacture a foamed sandwich structure or foamed laminate structure comprising of two layers or skin layers having a foamed aluminium-silicon alloy core structure, which foam structure has been produced with the aid of a preform according to this invention. The thickness of the foamed layers can be chosen in dependence of the application of the foamed laminate, but would typically be in the range of 2 to 25 mm.

The resultant foamed laminate may find application is for example components for a vehicle, such as the floor pan, the tailgate or the front panel of an automobile, or in the roof structure of the floor structure of a railway carriage. It may find application also in the form of a component for a marine vessel, such as a reinforcing component for the deck or the superstructure, or a heat-resistant wall. And it may find application in building constructions, such in the form of a wall for acoustic and/or heat insulation.

## Claims

1. Preform of a foamable laminate comprising of a core having a foaming agent between two metal layers or metal skin plates, **characterised in that**, the foaming agent is applied on at least one side of at least one aluminium-silicon alloy sheet interposed between said two metal layers.

2. Preform according to claim 1, wherein the aluminium-silicon alloy sheet is from an AA4xxx-series aluminium alloy, and preferably having a Si-content in the range of 4 to 14 wt.%, and more preferably in the range of 8 to 13 wt.%.

3. Preform according to claim 2, wherein the aluminium-silicon alloy sheet further comprises an alloying element as wetting agent and/or for modification of the silicon.

4. Preform according to any one of claims 1 to 3, wherein said perform has been compressed prior to a foaming operation at elevated temperature.

5. Preform according to any one of the preceding claims, wherein the foaming agent is the hydrogenatable metal is selected from Ti, Fe, Co, Al, Cu, Mg, W, Mn, Cr, Be and an alloy thereof.

6. Preform according to claim any one of claims 1 to 5, wherein the foaming agent is in the form titaniumhydride (TiH₂) powder in a quantity of from 0.02 to 8 wt.% of the aluminium-silicon alloy sheet, and preferably in a quantity of 0.05 to 2.5%.

7. Preform according to any one of the preceding claims, wherein between said metal layers there is further interposed at least one metal sheet or foil for lowering the melting point of the aluminium-silicon alloy during any subsequent foaming operation.

8. Preform according to claim 7, wherein the metal sheet or foil for lowering the melting point of the aluminium-silicon alloy is made of copper or copper-alloy.

9. Preform according to claim any one of the preceding claims, wherein the metal layer or skin plate is selected from aluminium, aluminium alloy, carbon steel, stainless steel, titanium.

10. Preform according to any one of the preceding claims, wherein one or both of the metal layers is from aluminium brazing sheet, the aluminium brazing sheet comprising of an aluminium core alloy on one or both sides clad with a brazing alloy, preferably of an AA4xxx-series alloy, and wherein at least of one of layers of the brazing alloy on the side facing the interposed aluminium-silicon alloy sheet.

11. Foamed laminate structure comprising of two metal layers or skin metal layers having a foamed aluminium-silicon alloy core structure, which foam structure has been produced with the aid of a preform according to any one of claims 1 to 10.

12. Method of manufacturing a preform of a foamable laminate according to any one of claims 1 to 10, comprising the steps of
(a) providing at least one aluminium-silicon sheet having on at least one side thereof a foaming agent to form a foam-agent coated Al-Si sheet;
(b) assembling said at least one foam-agent coated Al-Si sheet between two metal layers into an assembly;
(c) applying a controlled load on top of said assembly for improving the bonding between the foam agent and the Al-Si sheet and to form a preform, preferably the controlled load is applied in a rolling operation.

13. Method according to claim 12, wherein the controlled load is applied in a hot rolling operation at a temperature not exceeding 400°C, and preferably the preform is reduced in thickness by at least 25% during the load applying operation.

14. Method according to claims 12 or 13, wherein during assembling of the assembly also at least one metal sheet or foil is interposed between the two metal layers for lowering the melting point of the aluminium-silicon alloy during any subsequent foaming operation.

15. Method according to any one of claims 12 to 14, wherein during step (c) the resultant preform is provided in the form of a coiled preform.
